# DEMANDE DE BREVET EUROPEEN

(11) **EP 3 032 656 A1**
(43) Date de publication de la demande: **15.06.2016**
(21) Numéro de dépôt: 14290381.4
(22) Date de dépôt: 12.12.2014
(51) Int. Cl.: H01R 13/53, H02G 5/06

(54) **Arrangement de connexion électrique adapté à des éléments de poste sous enveloppe métallique électrique**

(71) Demandeur: Siemens Aktiengesellschaft, 80333 München (DE)
(72) Inventeur: Chabert, Benoit, F-73000 Chamery (FR); Serillon, David, F-38250 St Nizier (FR)
(74) Mandataire: Maier, Daniel Oliver

(57) **Abrégé**

La présente invention décrit un.arrangement de connexion électrique comprenant :
- au moins un connecteur électrique femelle (10, 2) d'un premier élément de poste sous enveloppe métallique électrique (GIS1),
- au moins un connecteur électrique mâle (12) d'un deuxième élément de poste sous enveloppe métallique électrique (GIS2) apte à être couplé à une face avant du connecteur femelle lors d'une assemblage mécanique du premier et du deuxième éléments (GIS1, GIS2),
- un bras de support (9) ayant une section d'extrémité (1) maintenant au moins une face arrière du connecteur électrique femelle,

le dit arrangement étant caractérisé en ce que :
- une portion d'extrémité (3) prolonge le bras de support à partir de la section d'extrémité (1) et encapsule au moins une face latérale du connecteur électrique femelle (10, 2) jusqu'à sa face avant,
- la portion d'extrémité (3) présente au moins une génératrice externe (6) dont la géométrie est définie en fonction d'une distance définie entre au moins ladite génératrice externe (6) et une génératrice interne (5) du premier élément de poste sous enveloppe métallique électrique (GIS1).

## Description

La présente invention concerne un arrangement de connexion électrique adapté à des éléments de poste sous enveloppe métallique électrique de type GIS selon le préambule de la revendication 1.

Les postes sous enveloppe métallique électrique (en anglais « Gas Insulated Switchgear ») sont composés de plusieurs compartiments ou éléments aptes à être assemblés mécaniquement ainsi que connectés électriquement. Ainsi, la conductivité électrique entre par exemple deux éléments à assembler est assurée par des moyens de couplage de type connecteurs éléctrique mâle/femelle disposés respectivement à une section de couplage de chaque élément. Généralement, de tels connecteurs sont couplés à un moyen pour les positionner, de façon à ajuster leur couplage mécanique en raison des sensibles déviations dimensionnelles de tolérances permises lors de la fabrication de composants du poste sous enveloppe métallique électrique.

Un exemple d'arrangement de connexion électrique adapté à des éléments de poste sous enveloppe métallique électrique est ainsi présenté au travers des figures suivantes :
- Figure 1 :: coupe longitudinale de deux éléments de poste sous enveloppe métallique électrique avant leur couplage,
- Figure 2 :: coupe longitudinale de deux éléments selon figure 1 en position couplée,
- Figure 3 :: coupe longitudinale de deux connecteurs électriques couplés selon figure 2,
- Figure 4 :: vue grossie de la coupe longitudinale selon figure 1.

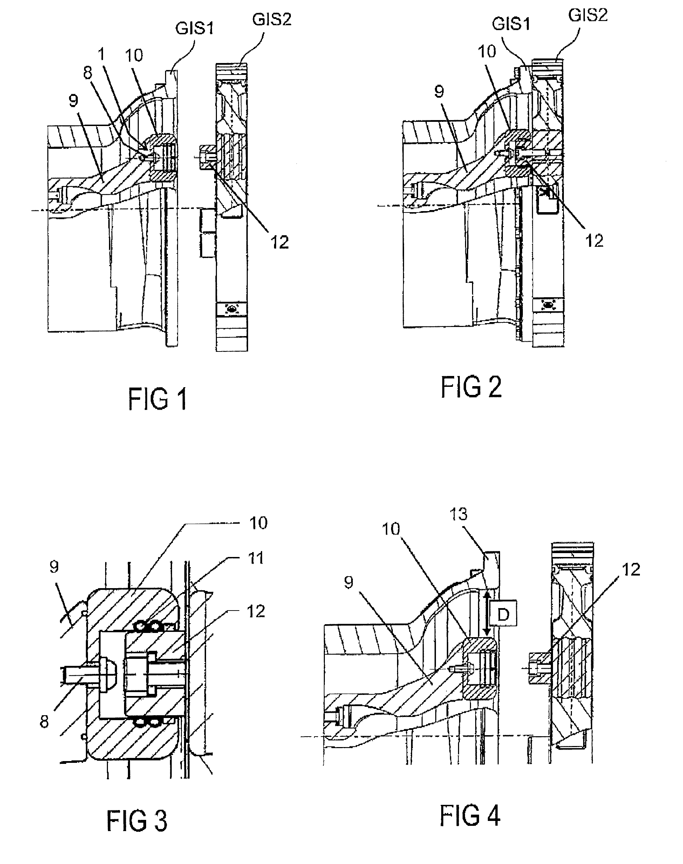

**Figure 1** présente une coupe longitudinale de deux éléments (GIS1, GIS2) de poste sous enveloppe métallique électrique avant leur couplage (mécanique et électrique) ainsi qu'un arrangement associé de connexion électrique comprenant :
- au moins un connecteur électrique femelle (10) d'un premier élément de poste sous enveloppe métallique électrique (GIS1),
- au moins un connecteur électrique mâle (12) d'un deuxième élément de poste sous enveloppe métallique électrique (GIS2) apte à être couplé à une face avant du connecteur femelle lors d'une assemblage mécanique du premier et du deuxième éléments (GIS1, GIS2),
- un bras de support (9) disposé ici dans premier élément de poste sous enveloppe métallique électrique (GIS1) et ayant une section d'extrémité (1) maintenant au moins une face arrière du connecteur électrique femelle.

Dans la pratique et comme représenté en figure 1, le connecteur femelle (10) est maintenu à la section d'extrémité (1) au moyen d'au moins un boulon (8) traversant une ouverture de la face arrière dudit connecteur femelle (10) et venant se solidariser dans la masse du bras de support (9) au travers de la section d'extrémité (1). L'ouverture de la face arrière dudit connecteur femelle (10) a une dimension suffisamment grande par rapport au diamètre du boulon (8) pour permettre au connecteur femelle de le positionner, de façon à ajuster son couplage mécanique avec le connecteur mâle (12) de type broche.

**Figure 2** présente une coupe longitudinale des deux éléments (GIS1, GIS2) selon figure 1, une fois qu'ils sont en position couplée mécaniquement et électriquement. La broche du connecteur mâle (12) est donc enfichée dans un évidement du connecteur femelle (10). La broche du connecteur mâle (12) ici fixe par rapport au deuxième élément (GIS2) joue donc le rôle de guide de positionnement du connecteur femelle (10) par rapport au bras de support (9), dès lors qu'un alignement transversal des deux connecteurs n'était pas parfait.

**Figure 3** présente une coupe longitudinale des deux connecteurs électriques mâle et femelle (10, 12) couplés selon figure 2. Il est ici plus facile de voir que l'ouverture de la face arrière dudit connecteur femelle (10) a une dimension suffisamment grande par rapport au diamètre du boulon (8) pour permettre au connecteur femelle de le positionner par rapport au bras de support (9), de façon à ajuster son couplage mécanique avec le connecteur mâle (12) de type broche. Les connecteurs mâle et femelle (12, 10) sont mis en contact mécanique et électrique par l'intermédiaire de moyens de pression (11) entre leurs faces latérales, idéalement par des moyens à ressort conducteur.

**Figure 4** présente une vue grossie de la coupe longitudinale selon figure 1 dans le but de comprendre la problématique de l'invention. Sachant que le connecteur femelle subit un positionnement mécanique transversal par rapport au bras de support (9) lors de son couplage au connecteur mâle, une distance (D) entre une face latérale du connecteur électrique femelle et une portion (13) de paroi interne du premier élément de poste sous enveloppe métallique électrique (GIS1) est donc vouée à varier, ce qui tend à engendrer des non-uniformités de champ électrique sous cette portion (13) et, au pire, à provoquer des amorçages intempestifs entre le connecteur électrique et la paroi interne du premier élément du poste sous enveloppe métallique électrique (GIS1).

Un but de l'invention est donc de proposer un arrangement de connexion électrique adapté à des éléments de poste sous enveloppe métallique électrique, de sorte que le couplage mécanique des dits éléments n'induise pas de non-uniformité de champ électrique dans au moins un des éléments en raison du positionnement relatif permis de connecteurs électriques respectivement disposés dans chacun des éléments.

L'invention propose ainsi un tel arrangement de connexion électrique selon la revendication 1, suivi d'un ensemble de sous-revendications présentant également des avantages de l'invention. Tout le jeu de revendications est plus amplement décrit au travers d'un exemple de réalisation fourni à l'aide de la figure décrite :

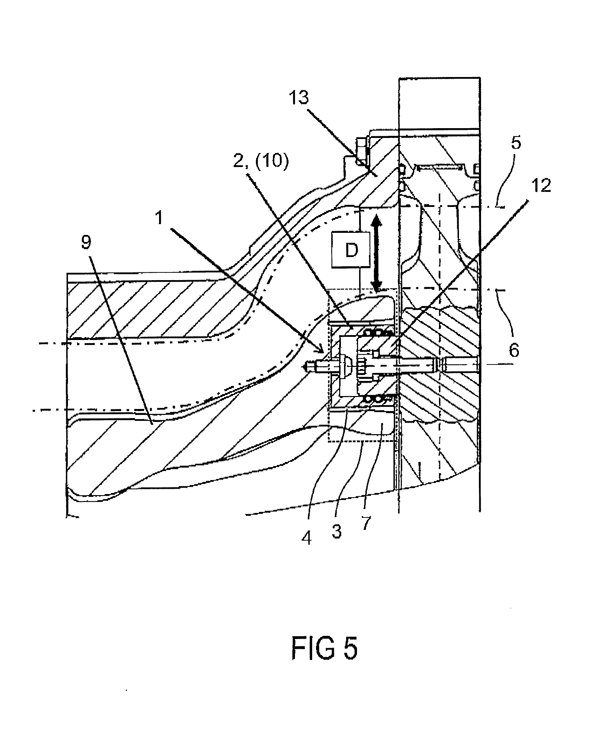

- Figure 5 :: coupe longitudinale de deux éléments de poste sous enveloppe métallique électrique en position couplée comprenant un arrangement de connexion électrique selon l'invention.

Figure 5 présente une coupe longitudinale de deux éléments (GIS1, GIS2) de poste sous enveloppe métallique électrique en position couplée comprenant un arrangement de connexion électrique selon l'invention.

Analogiquement aux figures 1 à 4, il est donc proposé un arrangement de connexion électrique comprenant :
- au moins un connecteur électrique femelle (2) (aux figures 1 à 4, référence 10) d'un premier élément d'un poste sous enveloppe métallique électrique (GIS1),
- au moins un connecteur électrique mâle (12) d'un deuxième élément de poste sous enveloppe métallique électrique (GIS2) apte à être couplé à une face avant du connecteur femelle lors d'une assemblage mécanique du premier et du deuxième éléments (GIS1, GIS2),
- un bras de support (9) disposé ici dans premier élément de poste sous enveloppe métallique électrique (GIS1) et ayant une section d'extrémité (1) maintenant au moins une face arrière du connecteur électrique femelle.

L'arrangement selon l'invention se caractérise enfin en ce que :
- une portion d'extrémité (3) prolonge le bras de support à partir de la section d'extrémité (1) et encapsule au moins une face latérale du connecteur électrique femelle (10, 2) jusqu'à sa face avant (la face avant recevant le connecteur mâle 12),
- la portion d'extrémité (3) présente au moins une génératrice externe (6) dont la géométrie est définie en fonction d'une distance (D) définie et invariable entre au moins ladite génératrice externe (6) et une paroi ou génératrice interne (5) du premier élément de poste sous enveloppe métallique électrique (GIS1)

En d'autres termes, la portion d'extrémité (3) forme un capot latéral (ici tel qu'une bague annulaire-conique) du connecteur femelle (2), de sorte que, même si ledit connecteur femelle est repositionné transversalement par rapport au bras de support (9), ce repositionnement est effectué sous le dit capot (en partie interne du capot). A cet effet, la portion d'extrémité (3) ou le dit capot encapsule la surface latérale du connecteur électrique femelle sous un jeu latéral (4). Les distances ou géométrie entre une génératrice externe (6) du capot et une paroi ou génératrice interne (5) du premier élément sont donc invariantes quel que soit le repositionnement du connecteur femelle encapsulé de manière mobile dans le capot, ce qui permet ainsi de préserver les propriétés diélectriques requises pour le bon établissement d'un champ électrique uniforme dans les éléments du poste d'enveloppe électrique.

Idéalement, le bras de support (9) et la portion d'extrémité (3) sont monoblocs ou assemblés sous forme finale monobloc et forment idéalement une structure à géométrie externe continue selon au moins un plan longitudinal. De cette façon, une continuité de leur profil externe selon une distance définie avec la paroi interne des éléments confère avantageusement de meilleures propriétés diélectriques au poste sous enveloppe métallique et une uniformité optimale du champ électrique.

Egalement, les connecteurs mâle et femelle présentent respecttivement une face avant disposée en section d'une ouverture d'un des deux éléments d'enveloppe métallique électrique (GIS1, GIS2), de sorte que l'accouplement desdits deux éléments induise l'accouplement des deux faces avant des dits connecteurs mâle et femelle.

Dans les exemples donnés, le dit bras de support a une forme principalement longitudinale et présente au moins une majeure portion dont au moins une génératrice externe est également disposée à une distance définie de la paroi ou génératrice interne (5) du premier élément de poste sous enveloppe métallique électrique (GIS1)), de sorte que le long dudit bras, les propriétés diélectriques du poste sous enveloppe métallique et une uniformité du champ électrique soient ainsi optimales. D'autres formes de bras de support peuvent aussi être envisagées. Sous cette même visée, il est aussi possible de prévoir que les deux connecteurs mâle et femelle soient encapsulés communément sous un capot plus étendu longitudinalement ou séparément sous deux capots juxtaposés selon l'invention.

## Revendications

1. Arrangement de connexion électrique comprenant :
- au moins un connecteur électrique femelle (10, 2) d'un premier élément de poste sous enveloppe métallique électrique (GIS1),
- au moins un connecteur électrique mâle (12) d'un deuxième élément de poste sous enveloppe métallique électrique (GIS2) apte à être couplé à une face avant du connecteur femelle lors d'une assemblage mécanique du premier et du deuxième éléments (GIS1, GIS2),
- un bras de support (9) ayant une section d'extrémité (1) maintenant au moins une face arrière du connecteur électrique femelle,
**caractérisé en ce que**
- une portion d'extrémité (3) prolonge le bras de support à partir de la section d'extrémité (1) et encapsule au moins une face latérale du connecteur électrique femelle (10, 2) jusqu'à sa face avant,
- la portion d'extrémité (3) présente au moins une génératrice externe (6) dont la géométrie est définie en fonction d'une distance définie entre au moins ladite génératrice externe (6) et une génératrice interne (5) du premier élément de poste sous enveloppe métallique électrique (GIS1).

2. Arrangement selon revendication 1, pour lequel la portion d'extrémité (3) encapsule la surface latérale du connecteur électrique femelle sous un jeu latéral (4).

3. Arrangement selon revendication 1, pour lequel le bras de support (9) et la portion d'extrémité (3) sont monoblocs ou assemblés sous forme finale monobloc.

4. Arrangement selon revendication 1, pour lequel le bras de support (9) et la portion d'extrémité (3) forment idéalement une structure à géométrie externe continue selon au moins un plan longitudinal.

5. Arrangement selon revendication 1, pour lequel les connecteurs mâle et femelle présentent respectivement une face avant disposée en section d'une ouverture d'un des deux éléments d'enveloppe métallique électrique (GIS1, GIS2), de sorte que l'accouplement desdits deux éléments induise l'accouplement des deux faces avant des dits connecteurs mâle et femelle.

6. Arrangement selon revendication 1, pour lequel les connecteurs mâle et femelle sont mis en contact mécanique et électrique par l'intermédiaire de moyens de pression (11) entre leurs faces latérales, idéalement par des moyens à ressort conducteur.
